# EUROPEAN PATENT SPECIFICATION

(11) **EP 3 686 501 B1**
(45) Date of publication and mention of the grant of the patent: **01.03.2023**
(21) Application number: 17925615.1
(22) Date of filing: 22.09.2017
(51) Int. Cl.: F24F 7/08, F24F 3/044, F24F 7/007, F24F 12/00, F24F 11/61, F24F 11/81

(54) **HEAT EXCHANGING TYPE VENTILATION SYSTEM**
BELÜFTUNGSSYSTEM VOM WÄRMETAUSCHERTYP
SYSTÈME DE VENTILATION DU TYPE À ÉCHANGE DE CHALEUR

(43) Date of publication of application: 29.07.2020
(73) Proprietor: Mitsubishi Electric Corporation, Chiyoda-ku Tokyo 100-8310 (JP)
(72) Inventor: DOI, Atsuo, Tokyo 100-8310 (JP)
(74) Representative: Witte, Weller & Partner Patentanwälte mbB
(86) International application number: PCT/JP2017/034337
(87) International publication number: WO 2019/058517

(56) References cited:
- EP-A1- 0 055 000
- EP-A1- 1 132 690
- EP-A1- 2 116 786
- EP-A2- 1 632 730
- EP-B1- 0 055 000
- EP-B1- 1 132 690
- JP-A- 2005 164 113
- JP-A- 2006 292 300
- JP-A- 2011 052 904
- KR-A- 20090 048 244
- US-A1- 2016 290 675

## Description

### Field

The present invention relates to a heat exchange ventilation system including a heat exchange ventilator that effects heat exchange between an exhaust air flow for discharging air in a room to the outside of the room and a supply air flow for supplying air outside the room into the room.

### Background

Among heat exchange ventilators is a device designed such that an exhaust air flow from a room and a supply air flow from outside the room cross in a total enthalpy heat exchanger element to exchange temperature and humidity between the exhaust air flow and the supply air flow. After that, the temperature of the supply air flow is adjusted by a temperature adjustment device installed in a supply air duct. Such a type of device is classified into a separate type and an integrated type. For the separate type, another device including a temperature adjustment coil is installed on the air supply duct of the heat exchange ventilator. For the integrated type, the temperature adjustment coil is disposed inside the heat exchange ventilator.

Japanese Patent Application Laid-open No. H8-42893 discloses a total enthalpy heat exchange ventilator including an air conditioning coil in an outdoor air supply passage that extends from an outdoor supply port to an indoor supply port inside a casing.

Document EP 1 132 690 A1, according to its abstract, states a room air conditioning/ventilation installation having an exhaust air movement system between the exhaust air inlet and the branch line of the recirculating air bypass. It has an exhaust air channel and an air supply unit between the inlet to the bypass and the air feed outlet. The exhaust air is passed by the first heat exchanger to a second heat exchanger. Document EP 1 132 690 discloses the features of the preamble of claim 1.

### Summary

### Technical Problem

When the heat exchange ventilator including the temperature adjustment coil performs ventilation and heating such as early in the winter morning where both the outdoor temperature and the indoor temperature are low, the total enthalpy heat exchange element performs temperature exchange between the outdoor air and indoor return air. In such a case, unfortunately, the temperature of the supply air having passed through the total enthalpy heat exchange element is still low. As a result, the temperature of air supplied into the room remains low without increasing to a sufficient temperature in spite of the air temperature being adjusted by the temperature adjustment coil. Thus, the heating may take time, or the room may not be heated.

In summer, the temperature of the supply air flow having passed through the temperature adjustment coil fails to decrease due to a small difference in temperature between the room and the outdoor air. Thus, the cooling may take time to lower the indoor temperature to a target temperature, or the room may not be cooled.

It is believed that the heat exchange ventilator is not less required to take in fresh outdoor air when the ventilator is operated such as early in the morning because it is expected that not so many people are present in the room. Such circumstances cause a problem of inefficient air conditioning such as when low temperature outdoor air is taken in through ventilation in spite of the room having not yet been heated in winter.

The above problem occurs prominently especially when ventilation and air conditioning are performed only by a system including the heat exchange ventilator and the temperature adjustment coil, that is, when the heat exchange ventilator having a temperature adjustment function is installed but an indoor air conditioner is not.

The present invention has been made in view of the above, and an object of the present invention is to provide a heat exchange ventilation system that includes a heat exchange ventilator and a temperature adjustment coil, and can efficiently adjust the temperature of air supplied into a room.

### Solution to Problem

In order to solve the above problem and achieve the object, a heat exchange ventilation system according to the present invention is a heat exchange ventilation system including a heat exchange ventilator, a supply air duct to supply outdoor air outside a room into the room, and an exhaust air duct to discharge air in the room to the outside of the room. The heat exchange ventilation system comprises the heat exchange ventilator including: a casing having an internal supply air duct and an internal exhaust air duct that are formed therethrough, the internal supply air duct being the supply air duct inside the heat exchange ventilator, the internal exhaust air duct being the exhaust air duct inside the heat exchange ventilator, the internal supply air duct and the internal exhaust air duct being independent of each other; a supply blower provided in the internal supply air duct; an exhaust blower provided in the internal exhaust air duct; and a heat exchange element provided inside the casing to effect heat exchange between air passing through the internal supply air duct and air passing through the internal exhaust air duct. The heat exchange ventilation system further comprises: a temperature adjusting coil disposed downstream of the heat exchange element in the supply air duct to heat or cool air passing through the supply air duct downstream of the heat exchange element; a return air supply duct to return the air in the room to a portion of the supply air duct located upstream of the temperature adjustment coil; an air duct switching damper to switch between the supply air duct and the return air supply duct, the supply air duct being an air duct for taking in the outdoor air; an outdoor air temperature sensor to detect temperature of the outdoor air; a return air temperature sensor to detect temperature of the air in the room that is to be discharged to the outside of the room; and a controller to control operations of the heat exchange ventilator, the temperature adjustment coil, and the air duct switching damper, wherein the controller executes first switching control for placing the air duct switching damper in a position to switch from the supply air duct to the return air supply duct when the temperature of the outdoor air detected by the outdoor air temperature sensor and the temperature of the air in the room detected by the return air temperature sensor satisfy a predetermined temperature condition during a heating operation mode of the temperature adjustment coil for heating the air or during a cooling operation mode of the temperature adjustment coil for cooling the air; wherein either the controller executes the first switching control when: the temperature adjustment coil is in the heating operation mode for heating the air; the temperature of the outdoor air detected by the outdoor air temperature sensor is lower than or equal to a predetermined first temperature threshold; and the temperature of the air in the room detected by the return air temperature sensor is lower than or equal to a predetermined second temperature threshold, or the controller executes the first switching control when: the temperature adjustment coil is in the cooling operation mode; the temperature of the outdoor air detected by the outdoor air temperature sensor is higher than or equal to a predetermined third temperature threshold; and the temperature of the air in the room detected by the return air temperature sensor is higher than or equal to a predetermined fourth temperature threshold; and wherein the controller executes second switching control for restoring the air duct switching damper to a position to switch from the return air supply duct to the supply air duct, when a temperature difference between a set temperature of the temperature adjustment coil and the temperature of the air in the room detected by the return air temperature sensor becomes smaller than or equal to a predetermined temperature difference threshold after the first switching control is executed.

### Advantageous Effects of Invention

The heat exchange ventilation system according to the present invention includes the heat exchange ventilator and the temperature adjustment coil, and has an effect that the temperature of air supplied into the room can be

### efficiently adjusted.

### Brief Description of Drawings

FIG. 1 is a schematic diagram illustrating a simplified configuration of a heat exchange ventilation system according to a first embodiment of the present invention.
FIG. 2 is a diagram illustrating a functional configuration related to control of the heat exchange ventilation system according to the first embodiment of the present invention.
FIG. 3 is a diagram illustrating an example of a hardware configuration of a processing circuit according to the first embodiment of the present invention.
FIG. 4 is a flowchart illustrating an example of the procedure of an air duct switching operation during operation of the heat exchange ventilation system according to the first embodiment of the present invention.
FIG. 5 is a flowchart illustrating an example of the procedure of an air duct switching operation during operation of the heat exchange ventilation system according to a second embodiment of the present invention.
FIG. 6 is a flowchart illustrating an example of the procedure of an air duct switching operation during operation of the heat exchange ventilation system according to a third embodiment of the present invention.
FIG. 7 is a flowchart illustrating an example of the procedure of an air duct switching operation during operation of the heat exchange ventilation system according to a fourth embodiment of the present invention.
FIG. 8 is a flowchart illustrating an example of the procedure of an air duct switching operation during operation of the heat exchange ventilation system according to a fifth embodiment of the present invention.
FIG. 9 is a schematic diagram illustrating a simplified configuration of a heat exchange ventilation system according to a sixth embodiment of the present invention.
FIG. 10 is a schematic diagram illustrating a simplified configuration of a heat exchange ventilation system according to a seventh embodiment of the present invention.

### Description of Embodiments

A heat exchange ventilation system according to embodiments of the present invention will now be described in detail with reference to the drawings. Note that the present invention is not limited to the embodiments, but by the scope of the claims.

### First Embodiment

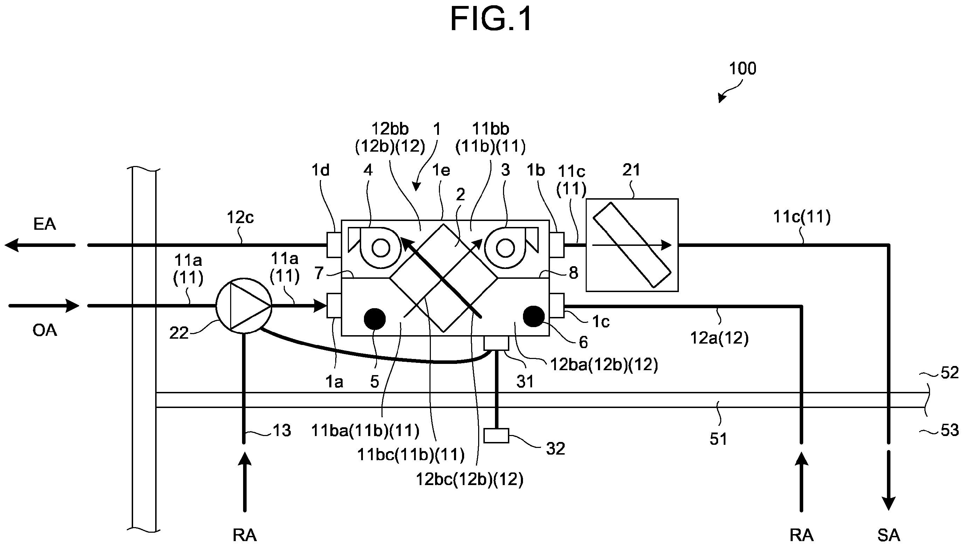

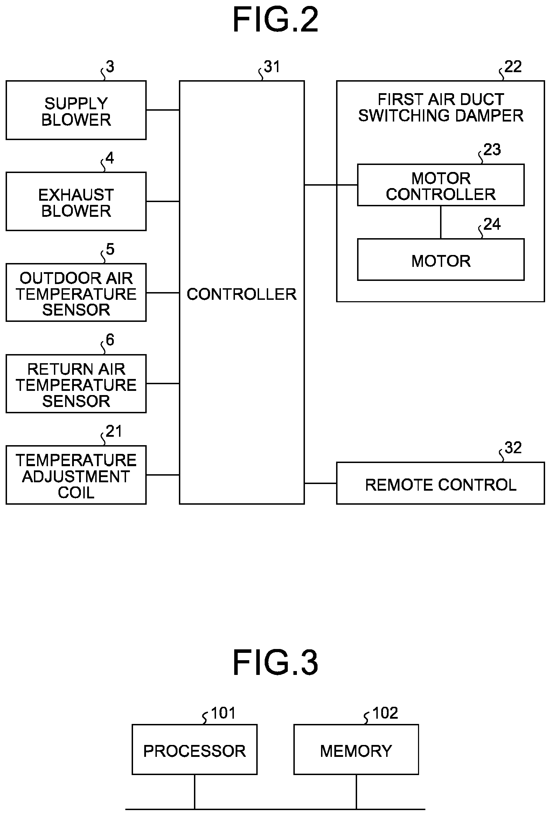

FIG. 1 is a schematic diagram illustrating a simplified configuration of a heat exchange ventilation system 100 according to a first embodiment of the present invention. FIG. 2 is a diagram illustrating a functional configuration related to control of the heat exchange ventilation system 100 according to the first embodiment of the present invention.

The heat exchange ventilation system 100 is a heat exchange ventilation system that includes a supply air duct 11 for supplying outdoor air, which is air outside a room, into the room and an exhaust air duct 12 for discharging air in the room to the outside of the room. The heat exchange ventilation system 100 includes a heat exchange ventilator 1. The heat exchange ventilator 1 includes a casing 1e and a heat exchange element 2 disposed inside a casing 1e. The heat exchange element 2 is a total enthalpy heat exchanger. The casing 1e includes an outdoor air inlet 1a for taking in outdoor air, a supply air outlet 1b for supplying outdoor air into a room, an indoor air inlet 1c for taking in indoor air, and an exhaust air outlet 1d for discharging indoor air to the outdoors. The heat exchange ventilator 1 is a heat exchange ventilator for air conditioning and has the heat exchange element 2 disposed inside the casing 1e. The heat exchange ventilator 1 is installed in a concealed manner in an attic 52. The heat exchange ventilator 1 further includes a controller 31 attached to the exterior of the casing 1e and a remote control 32 installed in a room 53. In FIG. 1, the area above a ceiling 51 is the attic 52, and the area below the ceiling 51 is the room 53.

Note that in FIG. 1, a reference character "OA" indicates outdoor air, a reference character "SA" indicates supply air, a reference character "RA" indicates return air, and a reference character "EA" indicates exhaust air.

The supply air duct 11 of the heat exchange ventilation system 100 is divided into three air ducts: an upstream supply air duct 11a; an internal supply air duct 11b; and a downstream supply air duct 11c. The upstream supply air duct 11a is disposed upstream of the heat exchange ventilator 1 and communicates with the outside of the room. The internal supply air duct 11b defines the supply air duct 11 inside the heat exchange ventilator 1. The downstream supply air duct 11c is disposed downstream of the heat exchange ventilator 1 and communicates with the room.

The exhaust air duct 12 of the heat exchange ventilation system 100 is divided into three air ducts: an upstream exhaust air duct 12a; an internal exhaust air duct 12b; and a downstream exhaust air duct 12c. The upstream exhaust air duct 12a is disposed upstream of the heat exchange ventilator 1 and communicates with the room. The internal exhaust air duct 12b defines the exhaust air duct 12 inside the heat exchange ventilator 1. The downstream exhaust air duct 12c is disposed downstream of the heat exchange ventilator 1 and communicates with the outside of the room.

The heat exchange ventilator 1 includes the internal supply air duct 11b and the internal exhaust air duct 12b. The internal supply air duct 11b, which defines the supply air duct 11 in the heat exchange ventilator 1, connects the outdoor air inlet 1a and the supply air outlet 1b to each other via the heat exchange element 2. The internal exhaust air duct 12b, which defines the exhaust air duct 12 in the heat exchange ventilator 1, connects the indoor air inlet 1c and the exhaust air outlet 1d to each other via the heat exchange element 2. The internal supply air duct 11b and the internal exhaust air duct 12b are air ducts independent of each other.

The internal supply air duct 11b, which is the air duct for supplying the outdoor air OA into the room, includes a pre-heat-exchange outdoor air duct 11ba, a post-heat-exchange outdoor air duct 11bb, and a heat exchange element supply air duct 11bc. The pre-heat-exchange outdoor air duct 11ba is formed between the outdoor air inlet 1a and the heat exchange element 2. The post-heat-exchange outdoor air duct 11bb is formed between the heat exchange element 2 and the supply air outlet 1b. The heat exchange element supply air duct 11bc is formed inside the heat exchange element 2.

The internal exhaust air duct 12b is the air duct for discharging to the outside of the room the return air RA which is the indoor air. The internal exhaust air duct 12b includes a pre-heat-exchange indoor air duct 12ba, a post-heat-exchange indoor air duct 12bb, and a heat exchange element exhaust air duct 12bc. The pre-heat-exchange indoor air duct 12ba is formed between the indoor air inlet 1c and the heat exchange element 2. The post-heat-exchange indoor air duct 12bb is formed between the heat exchange element 2 and the exhaust air outlet 1d. The heat exchange element exhaust air duct 12bc is formed inside the heat exchange element 2. With this configuration, the internal supply air duct 11b and the internal exhaust air duct 12b, which are configured in the manner as discussed above, cross in the heat exchange element 2.

The post-heat-exchange outdoor air duct 11bb and the post-heat-exchange indoor air duct 12bb are separated by the heat exchange element 2. The pre-heat-exchange outdoor air duct 11ba and the pre-heat-exchange indoor air duct 12ba are separated by the heat exchange element 2. The pre-heat-exchange outdoor air duct 11ba and the post-heat-exchange indoor air duct 12bb are separated by a partition wall 7 having a flat plate shape. The pre-heat-exchange indoor air duct 12ba and the post-heat-exchange outdoor air duct 11bb are separated by a partition wall 8.

The heat exchange ventilator 1 includes a supply blower 3 in the internal supply air duct 11b for generating a supply air flow directed from the outdoor air inlet 1a toward the supply air outlet 1b. The heat exchange ventilator 1 also includes an exhaust blower 4 in the internal exhaust air duct 12b for generating an exhaust air flow directed from the indoor air inlet 1c toward the exhaust air outlet 1d.

The supply blower 3 is disposed in the post-heat-exchange outdoor air duct 11bb and includes therein a supply motor (not shown) for driving the supply blower 3. The exhaust blower 4 is disposed in the post-heat exchange indoor air duct 12bb and includes therein an exhaust motor (not shown) for driving the exhaust blower 4. The speeds of the supply motor and the exhaust motor change according to control by the controller 31 described later.

The outdoor air inlet 1a is connected to the upstream supply air duct 11a that is formed of a duct pipe. The upstream supply air duct 11a is an outdoor air intake duct for taking in the outdoor air OA and directing the outdoor air OA to the heat exchange ventilator 1. The supply air outlet 1b is connected to the downstream supply air duct 11c that is formed of a duct pipe. The downstream supply air duct 11c is a supply air outlet duct for directing a supply air flow from the heat exchange ventilator 1 into the room. The indoor air inlet 1c is connected to the upstream exhaust air duct 12a that is formed of a duct pipe. The upstream exhaust air duct 12a is an indoor air intake duct for taking in the indoor air and directing the indoor air to the heat exchange ventilator 1. The exhaust air outlet 1d is connected to the downstream exhaust air duct 12c that is formed of a duct pipe. The downstream exhaust air duct 12c is an exhaust air outlet duct for directing an exhaust air flow from the heat exchange ventilator 1 to the outdoors.

A temperature adjustment coil 21 provided outside the heat exchange ventilator 1 is disposed on the downstream supply air duct 11c. The temperature adjustment coil 21 is a heat exchanger capable of heating or cooling the supply air flow passing through the downstream supply air duct 11c. That is, the temperature adjustment coil 21 is disposed downstream of the heat exchange element 2 on the supply air duct, and heats or cools the air passing through the supply air duct disposed downstream of the heat exchange element 2. The operation of the temperature adjustment coil 21 is controlled in conjunction with the heat exchange ventilator 1 by the controller 31, thereby adjusting the temperature of the supply air flow passing through the downstream supply air duct 11c, such that the indoor temperature reaches a target temperature set by a user. That is, when the supply air supplied from the heat exchange ventilator 1 passes through the temperature adjustment coil 21, the temperature adjustment coil 21 heats the supply air passing therethrough. Moreover, when the supply air supplied from the heat exchange ventilator 1 passes through the temperature adjustment coil 21, the temperature adjustment coil 21 cools the supply air passing therethrough.

As described above, in FIG. 1, the reference character "OA" indicates the outdoor air, the reference character "SA" indicates the supply air, the reference character "RA" indicates the return air, and the reference character "EA" indicates the exhaust air.

From outside the room, the outdoor air OA flows through the upstream supply air duct 11a communicating with the outside of a building and then through the outdoor air inlet 1a into the pre-heat exchange outdoor air duct 11ba, thereby becoming a supply air flow. The supply air flow into the pre-heat-exchange outdoor air duct 11ba passes through the heat exchange element 2, the post-heat exchange outdoor air duct 11bb, the supply blower 3, the supply air outlet 1b, the downstream supply air duct 11c, the temperature adjustment coil 21, and the downstream supply air duct 11c, after which the supply air flow is discharged into the room.

From inside the room, the return air RA flows through the upstream exhaust air duct 12a communicating with the room and then through the indoor air inlet 1c into the pre-heat exchange indoor air duct 12ba, thereby becoming an exhaust air flow. The exhaust air flow into the pre-heat-exchange indoor air duct 12ba passes through the heat exchange element 2, the post-heat-exchange indoor air duct 12bb, the exhaust blower 4, and the downstream exhaust air duct 12c, such that the exhaust air flow is discharged as the exhaust air EA to the outside of the room.

Disposed in the pre-heat-exchange outdoor air duct 11ba is an outdoor air temperature sensor 5 for detecting the temperature of the air passing through the pre-heat-exchange outdoor air duct 11ba, that is, the temperature of the outdoor air. The outdoor air temperature sensor 5 detects the temperature of the outdoor air in a predetermined cycle set in advance while the power of the heat exchange ventilator 1 is placed in an on state, and transmits information on the detected temperature of the outdoor air to the controller 31 described later.

Disposed in the pre-heat exchange indoor air duct 12ba is a return air temperature sensor 6 for detecting the indoor temperature by detecting the temperature of the air passing through the pre-heat-exchange indoor air duct 12ba, that is, the temperature of the return air being the indoor air. The return air temperature sensor 6 detects the temperature of the indoor air in a cycle set in advance while the power of the heat exchange ventilator 1 is placed in an on state, and transmits information on the detected temperature of the indoor air to the controller 31 described later.

A branch supply air duct 13 formed of a duct pipe is connected to a point on the upstream supply air duct 11a forming the outdoor air intake duct. Through the branch supply air duct 13, the upstream supply air duct 11a communicates with the room. That is, the branch supply air duct 13, which is connected to the upstream supply air duct 11a for allowing the upstream supply air duct 11a to communicate with the room, branches off from the upstream supply air duct 11a of the supply air duct 11 at a portion of the upstream supply air duct 11a located upstream of the heat exchange ventilator 1.

The heat exchange ventilation system 100 is provided with an air duct switching damper. The air duct switching damper switches between the supply air duct 11 and a return air supply duct. The supply air duct 11 is the air duct for taking in the outdoor air, and a return air supply duct is the air duct for returning air in the room to a portion of the supply air duct located upstream of the temperature adjustment coil 21 and circulating the indoor air. That is, the air duct switching damper, which is disposed at a portion of the upstream supply air duct 11a, is a first air duct switching damper 22 disposed at a portion of the upstream supply air duct 11a of the supply air duct located upstream of the heat exchange ventilator 1. The first air duct switching damper 22 switches between a first air duct and a second air duct. The first air duct is an air duct for taking in the outdoor air as the first air duct switching damper 22 closes the branch supply air duct 13 and opens the upstream supply air duct 11a. The second air duct is an air duct for allowing a part of the upstream supply air duct 11a located downstream of the branch supply air duct 13 to communicate with the branch supply air duct 13 so as to circulate the indoor air as the first air duct switching damper 22 closes the upstream side of the upstream supply air duct 11a. The second air duct is the return air supply duct.

The first air duct switching damper 22 is formed of, for example, a plate rotating inside the upstream supply air duct 11a. A motor 24 is driven by motor controller 23 under the control of the controller 31, such that the first air duct switching damper 22 changes its orientation inside the upstream supply air duct 11a to thereby switch between the first air duct and the second air duct.

The controller 31 has a function as an operation controller that controls the operations of the heat exchange ventilator 1, the temperature adjustment coil 21, and the air duct switching damper, and a function as a communication unit that transmits an air duct switching signal and performs information communication with another component in the heat exchange ventilation system 100. The controller 31 controls the operation of the heat exchange ventilator 1 on the basis of: information instructing an operation of the heat exchange ventilator 1, the information being received by and transmitted from the remote control 32; or information instructing the operation, the information being preset in the controller 31. The controller 31 controls the operation of the temperature adjustment coil 21 on the basis of: information instructing an operation of the temperature adjustment coil 21, the information being received by and transmitted from the remote control 32; or information instructing the operation, the information being preset in the controller 31. The controller 31 also controls the operation of the first air duct switching damper 22 on the basis of: information instructing an operation of the first air duct switching damper 22, the information being received by and transmitted from the remote control 32; or information instructing the operation, the information being preset in the controller 31.

The controller 31 executes first switching control for placing the first air duct switching damper 22 in a position to switch from the supply air duct 11 to the return air supply duct when the temperature of the outdoor air detected by the outdoor air temperature sensor 5 and the temperature of the air in the room detected by the return air temperature sensor 6 satisfy a predetermined temperature condition during a heating operation mode of the temperature adjustment coil 21 for heating the air or during a cooling operation mode of the temperature adjustment coil 21 for cooling the air.

Specifically, in the first embodiment, the execution of the first switching control changes the orientation of the first air duct switching damper 22 from a position that closes the branch supply air duct 13 and opens the upstream supply air duct 11a to a position that closes the upstream side of the upstream supply air duct 11a and allows the part of the upstream supply air duct 11a located downstream of the branch supply air duct 13 to communicate with the branch supply air duct 13. As a result, the air duct is switched from the first air duct to the second air duct.

That is, the controller 31 executes the first switching control when: the temperature adjustment coil 21 is operated in the heating operation mode; the temperature of the outdoor air detected by the outdoor air temperature sensor 5 is lower than or equal to a predetermined first temperature threshold; and the temperature of the air in the room detected by the return air temperature sensor 6 is lower than or equal to a predetermined second temperature threshold. The predetermined first temperature threshold, which is a temperature threshold for the outdoor air temperature sensor 5, allows the controller 31 to determine whether or not to execute the first switching control when the temperature adjustment coil 21 is operated in the heating operation mode. The predetermined second temperature threshold, which is a temperature threshold for the return air temperature sensor 6, allows the controller 31 to determine whether or not to execute the first switching control when the temperature adjustment coil 21 is operated in the heating operation mode.

Moreover, the controller 31 executes the first switching control when: the temperature adjustment coil 21 is operated in the cooling operation mode; the temperature of the outdoor air detected by the outdoor air temperature sensor 5 is higher than or equal to a predetermined third temperature threshold; and the temperature of the air in the room detected by the return air temperature sensor 6 is higher than or equal to a predetermined fourth temperature threshold. The predetermined third temperature threshold, which is a temperature threshold for the outdoor air temperature sensor 5, allows the controller 31 to determine whether or not to execute the first switching control when the temperature adjustment coil 21 is operated in the cooling operation mode. The predetermined fourth temperature threshold, which is a temperature threshold for the return air temperature sensor 6, allows the controller 31 to determine whether or not to execute the first switching control when the temperature adjustment coil 21 is operated in the cooling operation mode.

Moreover, the controller 31 executes second switching control for restoring the first air duct switching damper 22 to a position to switch from the branch supply air duct 13 that is the return air supply duct to the supply air duct 11, when a temperature difference between a set temperature of the temperature adjustment coil 21 and the temperature of the air in the room detected by the return air temperature sensor 6 becomes smaller than or equal to a predetermined temperature difference threshold after the first switching control is executed. The predetermined temperature difference threshold, which is a threshold of the temperature difference between the set temperature of the temperature adjustment coil 21 and the temperature of the air in the room, allows the controller 31 to determine whether or not to execute the second switching control after executing the first switching control.

The first temperature threshold, the second temperature threshold, the third temperature threshold, the fourth temperature threshold, and the temperature difference threshold are stored in the controller 31 in advance. The first temperature threshold, the second temperature threshold, the third temperature threshold, the fourth temperature threshold, and the temperature difference threshold can be set to arbitrary values by a user operating the remote control 32.

The controller 31 is implemented as a processing circuit having a hardware configuration illustrated in FIG. 3, for example. FIG. 3 is a diagram illustrating an example of the hardware configuration of the processing circuit according to the first embodiment of the present invention. When implemented as the processing circuit illustrated in FIG. 3, the controller 31 is implemented by a processor 101 executing a program stored in a memory 102. Alternatively, a plurality of processors and a plurality of memories may cooperatively implement the above functions. Yet alternatively, some of the functions of the controller 31 may be implemented as an electronic circuit, and the other functions may be implemented by using the processor 101 and the memory 102.

Similarly, the motor controller 23 may be implemented by the processor 101 executing a program stored in the memory 102. Alternatively, a plurality of processors and a plurality of memories may cooperatively implement the functions of the motor controller 23. Yet alternatively, some of the functions of the motor controller 23 may be implemented as an electronic circuit, and the other functions may be implemented by using the processor 101 and the memory 102.

The remote control 32 has main functions including a function as an operation unit that accepts a setting operation, and a function as a communication unit that performs communication with the controller 31 to transmit and receive information. The remote control 32 receives instructions on various controls such as the operation of the heat exchange ventilation system 100. The remote control 32 transmits, to the controller 31, various instructions received from a user. When the user selects a set value such as the set temperature of the temperature adjustment coil 21, the first temperature threshold, the second temperature threshold, the third temperature threshold, the fourth temperature threshold, and the temperature difference threshold, the remote control 32 transmits the selected set value to the controller 31. That is, the first temperature threshold, the second temperature threshold, the third temperature threshold, the fourth temperature threshold, and the temperature difference threshold can be set to arbitrary values by the user operating the remote control 32.

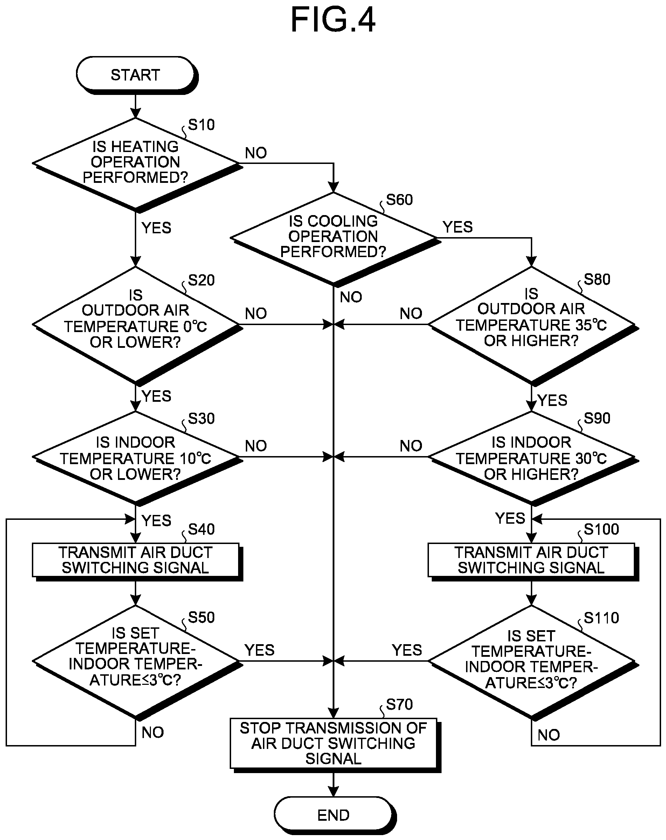

Next, the air duct switching operation performed by the first air duct switching damper 22 during operation of the heat exchange ventilation system 100 will be described. FIG. 4 is a flowchart illustrating an example of the procedure of the air duct switching operation during operation of the heat exchange ventilation system 100 according to the first embodiment of the present invention.

First, when the power supply of the heat exchange ventilation system 100 is turned on, in step S10, the controller 31 determines whether or not the current operation of the temperature adjustment coil 21 is the heating operation.

For example, if the current season is winter and the current operation of the temperature adjustment coil 21 is the heating operation, that is, if "Yes" in step S10, the controller 31 proceeds to step S20 and determines whether or not the current outdoor air temperature detected by the outdoor air temperature sensor 5 is 0°C or lower. In this case, 0°C is the predetermined first temperature threshold.

If the current outdoor air temperature is 0°C or lower, that is, if "Yes" in step S20, the controller 31 proceeds to step S30 and determines whether or not the current indoor air temperature detected by the return air temperature sensor 6, that is, the indoor temperature, is 10°C or lower. In this case, 10°C is the predetermined second temperature threshold.

If the current indoor temperature is 10°C or lower, that is, if "Yes" in step S30, the controller 31 proceeds to step S40 and transmits, to the first air duct switching damper 22, the air duct switching signal for instructing switching of the air duct, thereby executing the first switching control for switching from the first air duct to the second air duct. The first air duct switching damper 22 keeps its orientation changed so as to switch from the first air duct to the second air duct only during the transmission of the air duct switching signal.

Next, in step S50, the controller 31 determines whether or not the temperature difference between the set temperature of the temperature adjustment coil 21 and the current indoor air temperature detected by the return air temperature sensor 6 is 3°C or less, that is, whether or not "the set temperature of the temperature adjustment coil 21-the current indoor temperature ≤ 3°C".

If the temperature difference between the set temperature of the temperature adjustment coil 21 and the current indoor air temperature detected by the return air temperature sensor 6 is not 3°C or less, that is, if "No" in step S50, the process returns to step S40.

If the temperature difference between the set temperature of the temperature adjustment coil 21 and the current indoor air temperature detected by the return air temperature sensor 6 is 3°C or less, that is, if "Yes" in step S50, the controller 31 proceeds to step S70 to stop the transmission of the air duct switching signal and execute the second switching control. The execution of the second switching control switches from the second air duct to the first air duct, thereby ending the series of air duct switching operations.

Also, if it is "No" in step S20 and "No" in step S30, the controller 31 proceeds to step S70 to stop the transmission of the air duct switching signal and execute the second switching control, thereby switching from the second air duct to the first air duct and ending the series of air duct switching operations.

On the other hand, if the current operation of the temperature adjustment coil 21 is not the heating operation, that is, if "No" in step S10, the controller 31 proceeds to step S60 and determines whether or not the current operation of the temperature adjustment coil 21 is the cooling operation.

For example, if the current season is summer and the current operation of the temperature adjustment coil 21 is the cooling operation, that is, if "Yes" in step S60, the controller 31 proceeds to step S80 and determines whether or not the current outdoor air temperature detected by the outdoor air temperature sensor 5 is 35°C or higher. In this case, 35°C is the predetermined third temperature threshold.

If the current outdoor air temperature is 35°C or higher, that is, if "Yes" in step S80, the controller 31 proceeds to step S90 and determines whether or not the current indoor air temperature detected by the return air temperature sensor 6, that is, the indoor temperature, is 30°C or higher. In this case, 30°C is the predetermined fourth temperature threshold.

If the current indoor temperature is 30°C or higher, that is, if "Yes" in step S90, the controller 31 proceeds to step S100 and transmits the air duct switching signal to the first air duct switching damper 22, thereby executing the first switching control for switching from the first air duct to the second air duct.

Next, in step S110, the controller 31 determines whether or not the temperature difference between the set temperature of the temperature adjustment coil 21 and the current indoor air temperature detected by the return air temperature sensor 6 is 3°C or less, that is, whether or not "the set temperature of the temperature adjustment coil 21-the current indoor temperature ≤ 3°C".

If the temperature difference between the set temperature of the temperature adjustment coil 21 and the current indoor air temperature detected by the return air temperature sensor 6 is not 3°C or less, that is, if "No" in step S110, the process returns to step S100.

If the temperature difference between the set temperature of the temperature adjustment coil 21 and the current indoor air temperature detected by the return air temperature sensor 6 is 3°C or less, that is, if "Yes" in step S110, the controller 31 proceeds to step S70 to stop the transmission of the air duct switching signal and execute the second switching control. The execution of the second switching control switches from the second air duct to the first air duct, thereby ending the series of air duct switching operations.

Also, if it is "No" in step S80 and "No" in step S90, the controller 31 proceeds to step S70 to stop the transmission of the air duct switching signal and execute the second switching control, thereby switching from the second air duct to the first air duct and ending the series of air duct switching operations.

In the heat exchange ventilation system 100 according to the first embodiment described above, the controller 31 automatically executes the first switching control for placing the first air duct switching damper 22 in the position to switch from the supply air duct 11 to the return air supply duct when the temperature of the outdoor air detected by the outdoor air temperature sensor 5 and the temperature of the air in the room detected by the return air temperature sensor 6 satisfy a predetermined temperature condition during the heating operation mode of the temperature adjustment coil 21 or during the cooling operation mode of the temperature adjustment coil 21. As a result, it becomes possible to automatically switch from the supply air duct 11, which is the air duct for taking in the outdoor air, to the return air supply duct, which is the air duct for returning the air in the room to the portion of the supply air duct located upstream of the temperature adjustment coil 21 and circulating the indoor air. Thus, the indoor air rather than the outdoor air can be taken into the heat exchange ventilation system 100. As a result, compared with a case where the outdoor air is taken into the heat exchange ventilation system 100, the temperature of the air supplied into the room can be adjusted rapidly, and the temperature of the room can be increased rapidly.

Even when the temperature of the air having passed through the heat exchange ventilator 1 is low early in the morning in winter where the outdoor air temperature and the indoor temperature are both low, for example, the heat exchange ventilation system 100 can rapidly heat the air supplied into the room as compared with the case where the outdoor air is taken into the heat exchange ventilation system 100; as a result, the temperature of the room can increase rapidly.

The heat exchange ventilation system 100 achieves indoor air conditioning by means of only the device having both a ventilation function and a temperature adjustment function. The use of the heat exchange ventilation system 100 can reduce devices installed and materials such as the duct pipes, and also provide a comfortable indoor environment even in simplifying the air conditioning system for the purpose of reducing the power used.

### Second Embodiment

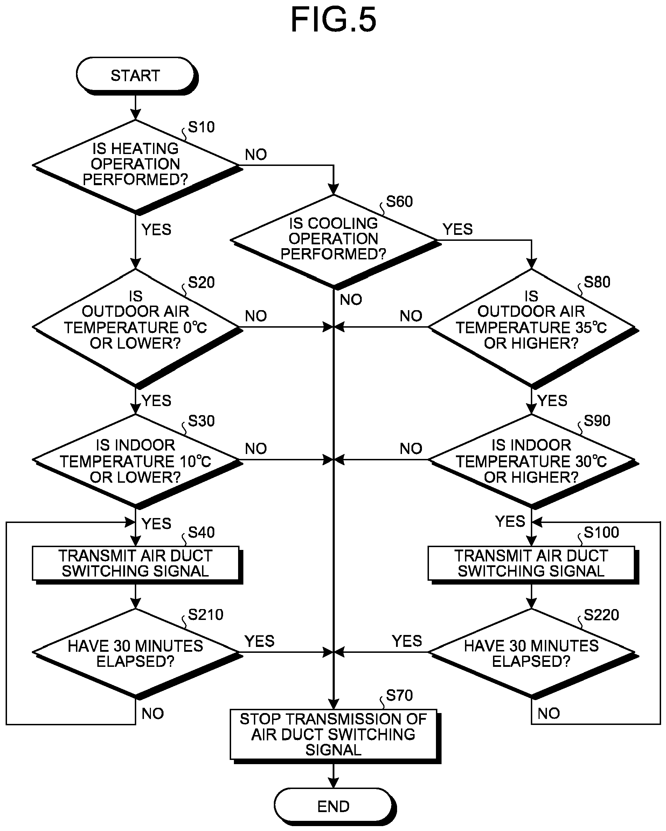

A second embodiment will describe a case where the controller 31 executes the second switching control when a predetermined time elapses after execution of the first switching control. FIG. 5 is a flowchart illustrating an example of the procedure of the air duct switching operation during operation of the heat exchange ventilation system 100 according to the second embodiment of the present invention. The flowchart illustrated in FIG. 5 is different from the flowchart illustrated in FIG. 4 in that step S210 is performed instead of step S50, and step S220 is performed instead of step S110.

In step S210, the controller 31 determines whether or not 30 minutes have elapsed since the execution of the first switching control in step S40, that is, whether or not 30 minutes have elapsed since the transmission of the air duct switching signal started.

If 30 minutes have not elapsed since the execution of the first switching control, that is, if "No" in step S210, the process returns to step S40 and the first switching control continues. If 30 minutes have elapsed since the execution of the first switching control, that is, if "Yes" in step S210, the process proceeds to step S70.

In step S220, the controller 31 determines whether or not 30 minutes have elapsed since the execution of the first switching control in step S100, that is, whether or not 30 minutes have elapsed since the transmission of the air duct switching signal started.

If 30 minutes have not elapsed since the execution of the first switching control, that is, if "No" in step S220, the process returns to step S100 and the first switching control continues. If 30 minutes have elapsed since the execution of the first switching control, that is, if "Yes" in step S220, the process proceeds to step S70.

The effect similar to that of the first embodiment can be obtained when the control is performed in the flow described above as well.

### Third Embodiment

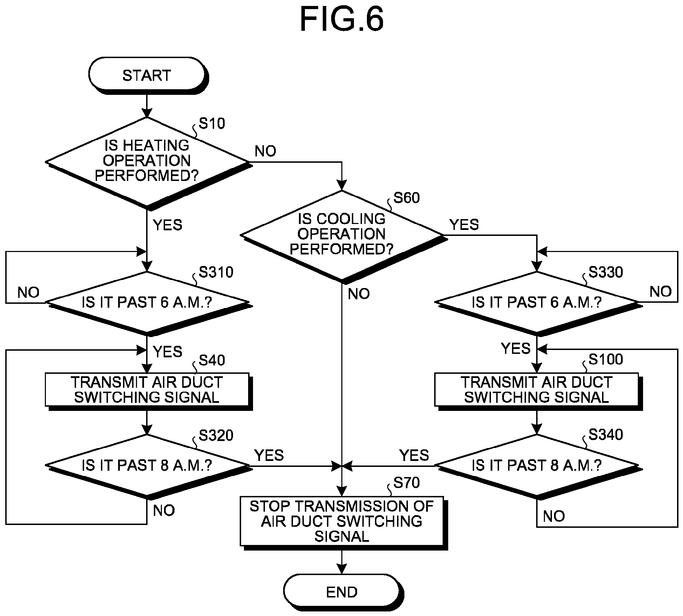

A third embodiment will describe a case where the controller 31 has a time function and executes the first switching control and the second switching control on the basis of the current time and a predetermined time. FIG. 6 is a flowchart illustrating an example of the procedure of the air duct switching operation during operation of the heat exchange ventilation system 100 according to the third embodiment of the present invention. The flowchart illustrated in FIG. 6 is different from the flowchart illustrated in FIG. 4 in that step S310 is performed instead of step S20 and step S30, step S320 is performed instead of step S50, step S330 is performed instead of step S80 and step S90, and step S340 is performed instead of step S110.

In step S310, the controller 31 determines whether or not the current time is past 6 a.m. If the current time is not past 6 a.m., that is, if "No" in step S310, the process returns to step S310. If the current time is past 6 a.m., that is, if "Yes" in step S310, the process proceeds to step S40.

In step S320, the controller 31 determines whether or not the current time is past 8 a.m. If the current time is not past 8 a.m., that is, if "No" in step S320, the process returns to step S40. If the current time is past 8 a.m., that is, if "Yes" in step S320, the process proceeds to step S70.

In step S330, the controller 31 determines whether or not the current time is past 6 a.m. If the current time is not past 6 a.m., that is, if "No" in step S330, the process returns to step S330. If the current time is past 6 a.m., that is, if "Yes" in step S330, the process proceeds to step S100.

In step S340, the controller 31 determines whether or not the current time is past 8 a.m. If the current time is not past 8 a.m., that is, if "No" in step S340, the process returns to step S100. If the current time is past 8 a.m., that is, if "Yes" in step S340, the process proceeds to step S70.

That is, in the third embodiment, the controller 31 executes the first switching control when the current time is not past the predetermined time and the heat exchange ventilation system 100 is in operation, and executes the second switching control when the current time is past the predetermined time.

When performing the control indicated in the flowchart described above, the controller 31 automatically executes the first switching control and the second switching control on the basis of the current time to thereby switch the air duct. In this case as well, the effect similar to that of the first embodiment can be obtained. Such air duct control is suitable for application in places such as offices and schools where the heat exchange ventilation system 100 is used at a fixed time every day. The above air duct control enables the heat exchange ventilation system 100 to change in role from the ventilator to the indoor air conditioner in accordance with a user's request such as in the early morning where the need for ventilation of the room is low, but the need for temperature adjustment is high. The above air duct control allows the single heat exchange ventilation system 100 to play two roles: the role of the ventilator; and the role of the indoor air conditioner, which is useful especially when no other indoor air conditioner is disposed in the room.

### Fourth Embodiment

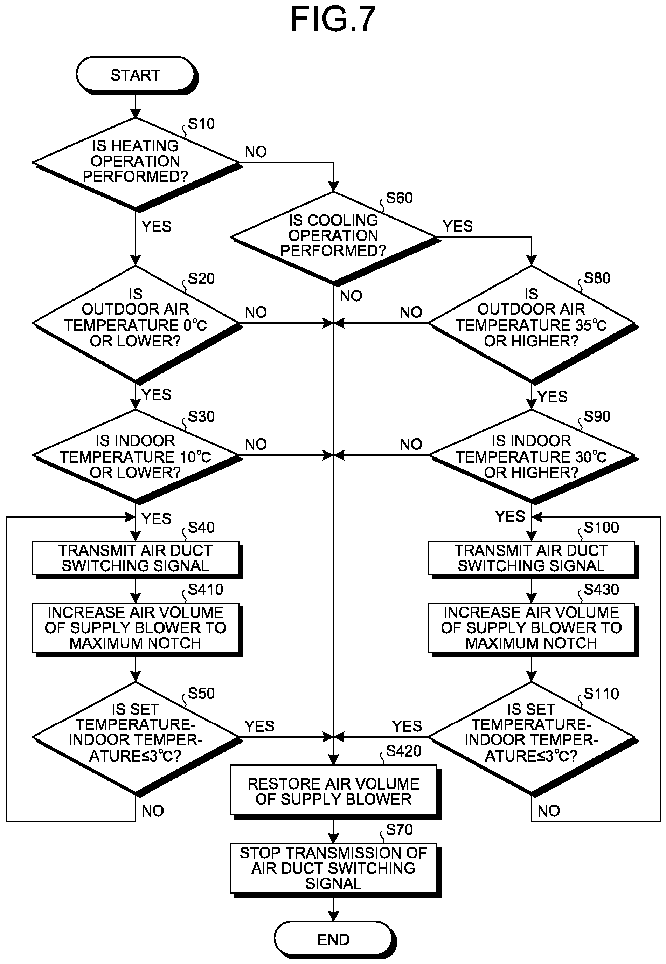

A fourth embodiment will describe a case where the controller 31 causes the supply blower 3 to provide a larger air volume after the execution of the first switching control than before the execution of the first switching control. FIG. 7 is a flowchart illustrating an example of the procedure of the air duct switching operation during operation of the heat exchange ventilation system 100 according to the fourth embodiment of the present invention. The flowchart illustrated in FIG. 7 is different from the flowchart illustrated in FIG. 4 in that step S410, step S420, and step S430 are performed.

In step S410, after executing the first switching control in step S40, the controller 31 performs control for increasing the air volume of the supply blower 3 to the maximum notch, providing the air volume larger than that before the execution of the first switching control.

In step S430, after executing the first switching control in step S100, the controller 31 performs control for increasing the air volume of the supply blower 3 to the maximum notch, providing the air volume larger than that before the execution of the first switching control.

In step S420, the controller 31 controls the air volume of the supply blower 3 such that the air volume having increased in steps S410 and S430 is restored to that before the execution of the first switching control.

Performing the control indicated in the flowchart described above makes it possible to automatically increase the air volume of the supply blower 3 after the execution of the first switching control such that the air volume becomes larger than that before the execution of the first switching control. As a result, the temperature of the indoor air can be adjusted more rapidly.

### Fifth Embodiment

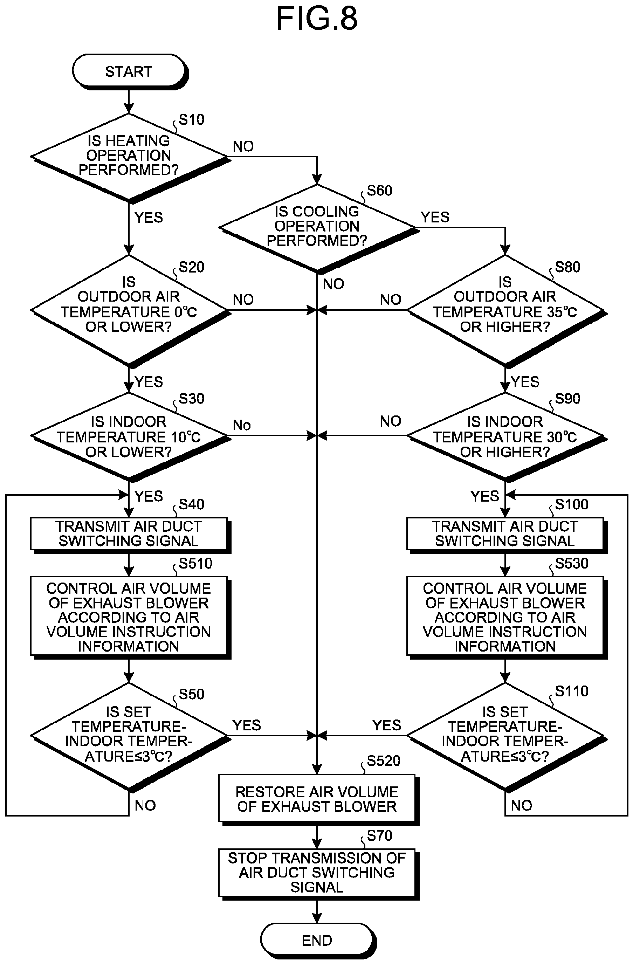

A fifth embodiment will describe a case where, during a time elapsing after the execution of the first switching control until the execution of the second switching control, the controller 31 controls the air volume of the exhaust blower 4 by switching the control of the exhaust blower 4 to any of: control for stopping the exhaust blower 4; control for causing the exhaust blower 4 to provide a smaller air volume than that before the execution of the first switching control; and control for causing the exhaust blower 4 to maintain the same air volume as that before the execution of the first switching control. FIG. 8 is a flowchart illustrating an example of the procedure of the air duct switching operation during operation of the heat exchange ventilation system 100 according to the fifth embodiment of the present invention. The flowchart illustrated in FIG. 8 is different from the flowchart illustrated in FIG. 4 in that step S510, step S520, and step S530 are performed.

In step S510 and step S530, after executing the first switching control in step S40 and step S100, the controller 31 switches to and executes, in accordance with air volume instruction information transmitted from the remote control 32, any of: the control for stopping the exhaust blower 4; the control for causing the exhaust blower 4 to provide a smaller air volume than that before the execution of the first switching control; and the control for causing the exhaust blower 4 to maintain the same air volume as that before the execution of the first switching control. The control of the air volume of the exhaust blower 4 can be changed at an arbitrary timing.

In step S520, the controller 31 controls the air volume of the exhaust blower 4 such that the air volume changed in steps S510 and S530 is restored to that before the execution of the first switching control.

Performing the control indicated in the flow described above makes it possible to change the air volume of the exhaust blower 4 to an arbitrary air volume after the execution of the first switching control so that, when the air volume is to be decreased, the temperature of the indoor air can be adjusted more rapidly.

Moreover, during a time elapsing after the execution of the first switching control until the execution of the second switching control, the controller 31 can execute predetermined control of the air volume of the exhaust blower 4, the predetermined control being set in the controller 31 and any one of: the control for stopping the exhaust blower 4; the control for causing the exhaust blower to provide a smaller air volume than that before the execution of the first switching control; and the control for causing the exhaust blower to maintain the same air volume as that before the execution of the first switching control.

Performing the above control makes it possible to change the air volume of the exhaust blower 4 to an arbitrary air volume after the execution of the first switching control so that, when the air volume is to be decreased, the temperature of the indoor air can be adjusted more rapidly.

### Sixth Embodiment

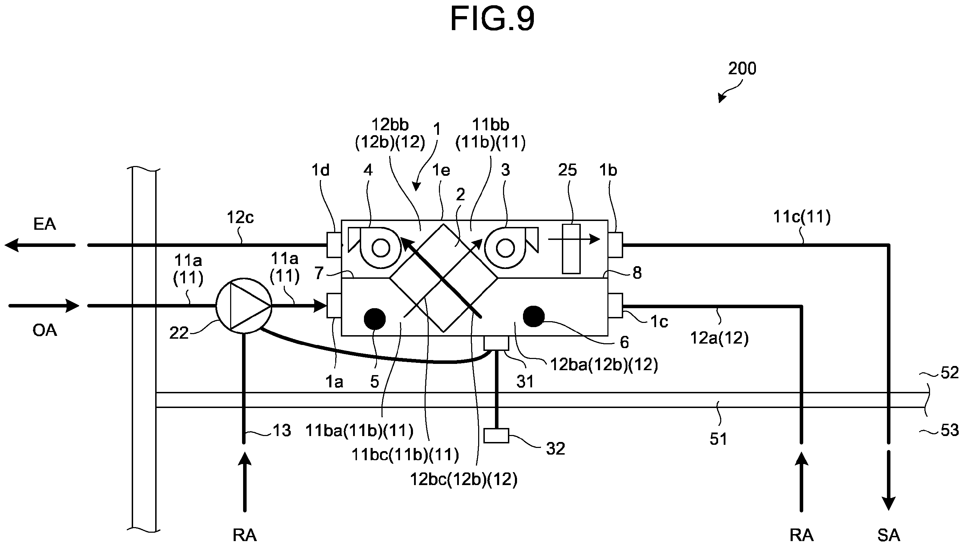

FIG. 9 is a schematic diagram illustrating a simplified configuration of a heat exchange ventilation system 200 according to a sixth embodiment of the present invention. The heat exchange ventilation system 200 according to the sixth embodiment of the present invention is different from the heat exchange ventilation system 100 in that a temperature adjustment coil 25 is incorporated in the heat exchange ventilator 1 and disposed downstream of the heat exchange element 2.

Even when the temperature adjustment coil 25 is incorporated downstream of the heat exchange element 2 within the heat exchange ventilator 1, the control illustrated in the first to fifth embodiments described above can be executed so that the effect similar to that of the heat exchange ventilation system 100 can be obtained. Moreover, since the temperature adjustment coil 25 is incorporated in the heat exchange ventilator 1 in advance, the duct pipe forming the downstream supply air duct 11c is easy to dispose.

### Seventh Embodiment

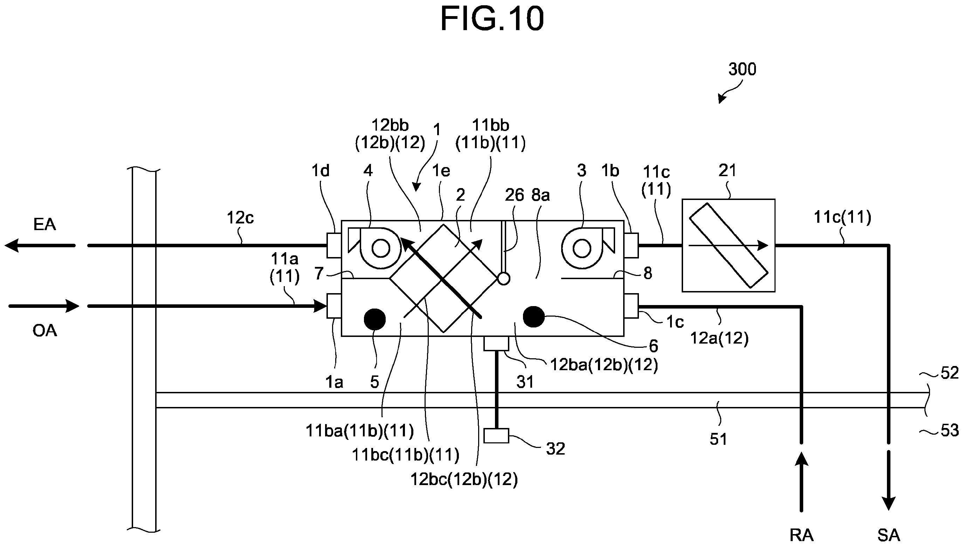

FIG. 10 is a schematic diagram illustrating a simplified configuration of a heat exchange ventilation system 300 according to a seventh embodiment of the present invention. The heat exchange ventilation system 300 according to the seventh embodiment of the present invention is different from the heat exchange ventilation system 100 in that a second air duct switching damper 26 is provided at a part of the partition wall 8, instead of the first air duct switching damper 22. As with the first air duct switching damper 22, the second air duct switching damper 26 is an air duct switching damper that switches between the supply air duct which is the air duct for taking in the outdoor air, and the return air supply duct for returning the air in the room to a portion of the supply air duct located upstream of the temperature adjustment coil.

Formed through the partition wall 8 is a bypass opening 8a through which a region located upstream of the supply blower 3 in the post-heat-exchange outdoor air duct 11bb communicates with the pre-heat-exchange indoor air duct 12ba. The second air duct switching damper 26, which is an opening/closing part for opening and closing the bypass opening 8a, is disposed in the post-heat-exchange outdoor air duct 11bb. The bypass opening 8a is provided between the post-heat-exchange outdoor air duct 11bb and the pre-heat-exchange indoor air duct 12ba for the purpose of allowing at least part of the exhaust air flow flowing through the pre-heat-exchange indoor air duct 12ba to flow into the post-heat- exchange outdoor air duct 11bb.

When the bypass opening 8a is closed by the second air duct switching damper 26, the post-heat-exchange outdoor air duct 11bb and the pre-heat-exchange indoor air duct 12ba are separated from each other so that a bypass flow of the exhaust air flow from the pre-heat-exchange indoor air duct 12ba into the post-heat-exchange outdoor air duct 11bb is not generated.

On the other hand, when the second air duct switching damper 26 is fully opened, the pre-heat-exchange indoor air duct 12ba communicates with the post-heat-exchange outdoor air duct 11bb via the bypass opening 8a, and at the same time a region of the post-heat exchange outdoor air duct 11bb located adjacent the heat exchange element 2 is closed, that is, the post-heat-exchange outdoor air duct 11bb is blocked between the heat exchange element 2 and the supply blower 3. As a result, a bypass flow of the exhaust air flow passing from the pre-heat exchange indoor air duct 12ba through the bypass opening 8a flows into the post-heat exchange outdoor air duct 11bb. The airflow on the upstream side of the second air duct switching damper 26 in the supply air duct 11 is not directed downstream of the second air duct switching damper 26.

That is, the second air duct switching damper 26 is an air duct switching damper disposed downstream of the heat exchange element in the supply air duct inside the heat exchange ventilator. The second air duct switching damper 26 switches between a third air duct and a fourth air duct. The third air duct is an air duct for taking in the outdoor air as the second air duct switching damper 26 separates a part of the internal supply air duct located downstream of the heat exchange element from a part of the exhaust air duct located upstream of the heat exchange element inside the heat exchange ventilator so as to open the part of the supply air duct located downstream of the heat exchange element inside the heat exchange ventilator. The fourth air duct is an air duct for allowing the part of the supply air duct located downstream of the heat exchange element inside the heat exchange ventilator to communicate with the part of the exhaust air duct located upstream of the heat exchange element inside the heat exchange ventilator so as to circulate the indoor air as the second air duct switching damper 26 closes a part of the supply air duct located downstream of the heat exchange element inside the heat exchange ventilator. The fourth air duct is the return air supply duct.

The heat exchange ventilation system 300 including the second air duct switching damper 26 instead of the first air duct switching damper 22 as described above can obtain the effect similar to that of the heat exchange ventilation system 100. Moreover, the technique illustrated in the first to sixth embodiments described above can be applied to the heat exchange ventilation system 300. Although a bypass flow in the the heat exchange ventilation system 300 does not pass through the heat exchange element 2, the bypass flow is not the outdoor air but the indoor air that can be rapidly heated when the air is supplied into the room as compared with taking the outdoor air into the heat exchange ventilation system 300; thus, the temperature of the room can increase rapidly.

The configurations illustrated in the above embodiments merely illustrate an example of the content of the present invention, which is defined by the scope of the claims.

### Reference Signs List

1 heat exchange ventilator; 1a outdoor air inlet; 1b supply air outlet; 1c indoor air inlet; 1d exhaust air outlet; 1e casing; 2 heat exchange element; 3 supply blower; 4 exhaust blower; 5 outdoor air temperature sensor; 6 return air temperature sensor; 7, 8 partition wall; 8a bypass opening; 11 supply air duct; 11a upstream supply air duct; 11b internal supply air duct; 11ba pre-heat exchange outdoor air duct; 11bb post-heat exchange outdoor air duct; 11bc heat exchange element supply air duct; 11c downstream supply air duct; 12 exhaust air duct; 12a upstream exhaust air duct; 12b internal exhaust air duct; 12ba pre-heat exchange indoor air duct; 12bb post-heat exchange indoor air duct; 12bc heat exchange element exhaust air duct; 12c downstream exhaust air duct; 13 branch supply air duct; 21, 25 temperature adjustment coil; 22 first air duct switching damper; 23 motor controller; 24 motor; 26 second air duct switching damper; 31 controller; 32 remote control; 51 ceiling; 52 ceiling space; 53 room; 100, 200, 300 heat exchange ventilation system; 101 processor; 102 memory.

## Claims

1. A heat exchange ventilation system (100;200;300) including a heat exchange ventilator (1), a supply air duct (11) to supply outdoor air outside a room into the room, and an exhaust air duct (12) to discharge air in the room to the outside of the room, the system comprising:
the heat exchange ventilator including:
a casing (1e) having an internal supply air duct and an internal exhaust air duct that are formed therethrough, the internal supply air duct being the supply air duct inside the heat exchange ventilator, the internal exhaust air duct being the exhaust air duct inside the heat exchange ventilator, the internal supply air duct and the internal exhaust air duct being independent of each other;
a supply blower (3) provided in the internal supply air duct;
an exhaust blower (4) provided in the internal exhaust air duct; and
a heat exchange element (2) provided inside the casing to effect heat exchange between air passing through the internal supply air duct and air passing through the internal exhaust air duct;
a temperature adjusting coil (21;25) disposed downstream of the heat exchange element in the supply air duct to heat or cool air passing through the supply air duct downstream of the heat exchange element;
a return air supply duct to return the air in the room to a portion of the supply air duct located upstream of the temperature adjustment coil;
an air duct switching damper (22;26) to switch between the supply air duct and the return air supply duct, the supply air duct being an air duct for taking in the outdoor air;
an outdoor air temperature sensor (5) to detect temperature of the outdoor air;
a return air temperature sensor (6) to detect temperature of the air in the room that is to be discharged to the outside of the room; and
a controller (31) to control operations of the heat exchange ventilator, the temperature adjustment coil, and the air duct switching damper;
**characterised in that**
the controller (31) executes first switching control for placing the air duct switching damper (22) in a position to switch from the supply air duct to the return air supply duct when the temperature of the outdoor air detected by the outdoor air temperature sensor and the temperature of the air in the room detected by the return air temperature sensor satisfy a predetermined temperature condition during a heating operation mode of the temperature adjustment coil for heating the air or during a cooling operation mode of the temperature adjustment coil for cooling the air;
wherein either
the controller (31) executes the first switching control when: the temperature adjustment coil is in the heating operation mode for heating the air; the temperature of the outdoor air detected by the outdoor air temperature sensor is lower than or equal to a predetermined first temperature threshold; and the temperature of the air in the room detected by the return air temperature sensor is lower than or equal to a predetermined second temperature threshold, or
the controller (31) executes the first switching control when: the temperature adjustment coil is in the cooling operation mode; the temperature of the outdoor air detected by the outdoor air temperature sensor is higher than or equal to a predetermined third temperature threshold; and the temperature of the air in the room detected by the return air temperature sensor is higher than or equal to a predetermined fourth temperature threshold; and
wherein the controller (31) executes second switching control for restoring the air duct switching damper to a position to switch from the return air supply duct to the supply air duct, when a temperature difference between a set temperature of the temperature adjustment coil and the temperature of the air in the room detected by the return air temperature sensor becomes smaller than or equal to a predetermined temperature difference threshold after the first switching control is executed.

2. The heat exchange ventilation system according to claim 1, wherein
when the temperature adjustment coil is either in a heating operation mode or in a cooling operation mode, the controller (31) executes, on the basis of a current time and a predetermined time, first switching control for placing the air duct switching damper in a position to switch from the supply air duct to the return air supply duct, and second switching control for restoring the air duct switching damper to a position to switch from the return air supply duct to the supply air duct.

3. The heat exchange ventilation system according to claim 2, wherein
the controller (31) executes the first switching control when the heat exchange ventilation system is in operation, and executes the second switching control when the current time is past the predetermined time.

4. The heat exchange ventilation system according to any one of claims 1 to 3, wherein
the controller (31) increases an air volume of the supply blower after executing the first switching control.

5. The heat exchange ventilation system according to any one of claims 1 to 3, wherein
during a time elapsing after execution of the first switching control until execution of the second switching control, the controller (31) is capable of switching control of the exhaust blower to arbitrary control and executing the arbitrary control, the arbitrary control being any of: control for stopping the exhaust blower; control for causing the exhaust blower to provide a smaller air volume than that before the execution of the first switching control; and control for causing the exhaust blower to maintain the same air volume as that before the execution of the first switching control.

6. The heat exchange ventilation system according to any one of claims 1 to 3, wherein
during a time elapsing after execution of the first switching control until execution of the second switching control, the controller (31) executes any one predetermined control of the exhaust blower among: control for stopping the exhaust blower; control for causing the exhaust blower to provide a smaller air volume than that before the execution of the first switching control; and control for causing the exhaust blower to maintain the same air volume as that before the execution of the first switching control.

7. The heat exchange ventilation system according to any one of claims 1 to 6, wherein
the temperature adjustment coil (21) is disposed downstream of the heat exchange element in the internal supply air duct.

8. The heat exchange ventilation system according to any one of claims 1 to 6, wherein
the temperature adjustment coil (25) is disposed at a portion of a downstream supply air duct located downstream of the internal supply air duct.

9. The heat exchange ventilation system according to any one of claims 1 to 6, further comprising a branch supply air duct (13) branching off from the supply air duct at a portion of an upstream supply air duct of the supply air duct located upstream of the heat exchange ventilator, and allowing the upstream supply air duct to communicate with the room, wherein
the air duct switching damper is a first air duct switching damper (22) disposed at a portion of the upstream supply air duct of the supply air duct located upstream of the heat exchange ventilator, the first air duct switching damper switching between a first air duct and a second air duct, the first air duct being an air duct for taking in the outdoor air as the first air duct switching damper closes the branch supply air duct and opens the upstream supply air duct, the second air duct being an air duct for allowing a part of the upstream supply air duct located downstream of the branch supply air duct to communicate with the branch supply air duct so as to circulate the indoor air as the first air duct switching damper closes an upstream side of the upstream supply air duct, and
the second air duct is the return air supply duct.

10. The heat exchange ventilation system according to any one of claims 1 to 6, wherein
the air duct switching damper is a second air duct switching damper (26) disposed downstream of the heat exchange element in the supply air duct inside the heat exchange ventilator, the second air duct switching damper switching between a third air duct and a fourth air duct, the third air duct being an air duct for taking in the outdoor air as the second air duct switching damper separates a part of the internal supply air duct located downstream of the heat exchange element from a part of the exhaust air duct located upstream of the heat exchange element inside the heat exchange ventilator so as to open the part of the supply air duct located downstream of the heat exchange element inside the heat exchange ventilator, the fourth air duct being an air duct for allowing the part of the supply air duct located downstream of the heat exchange element inside the heat exchange ventilator to communicate with the part of the exhaust air duct located upstream of the heat exchange element inside the heat exchange ventilator so as to circulate the indoor air as second air duct switching damper closes a part of the supply air duct located downstream of the heat exchange element inside the heat exchange ventilator, and
the fourth air duct is the return air supply duct.

## Patentansprüche

1. Wärmeaustausch-Ventilationssystem (100; 200; 300) mit einem Wärmeaustauschventilator (1), einem Zuluftkanal (11), um Außenluft von außerhalb eines Raumes in den Raum zuzuführen, und einen Abluftkanal (12), um Luft in dem Raum nach außen außerhalb des Raumes abzuführen, wobei das System das Folgende aufweist:
den Wärmeaustauschventilator mit:
einem Gehäuse (1e) beinhaltend einen internen Zuluftkanal und einen internen Abluftkanal derart ausgestaltet, dass der interne Zuluftkanal der Zuluftkanal innerhalb des Wärmeaustauschventilators ist, der interne Abluftkanal der Abluftkanal innerhalb des Wärmeaustauschventilators ist, wobei der interne Zuluftkanal und der interne Abluftkanal unabhängig voneinander sind;
einem Zuluftgebläse (3) bereitgestellt in dem internen Zuluftkanal;
einem Abluftgebläse (4) bereitgestellt in dem internen Abluftkanal; und
einem Wärmeaustauschelement (2) bereitgestellt innerhalb des Gehäuses, um Wärmeaustausch zwischen der durch den internen Zuluftkanal strömenden Luft und der durch den internen Abluftkanal strömenden Luft zu bewirken;
einer Temperaturregulierungsspirale (21; 25), die stromabwärts des Wärmeaustauschelements innerhalb des Zuluftkanals angeordnet ist, um die Luft zu erwärmen oder abzukühlen, die durch den Zuluftkanal stromabwärts des Wärmeaustauschelements strömt;
einem Rückluftkanal, um die Luft in dem Raum in einen Abschnitt des Zuluftkanals zurückzuführen, der stromaufwärts der Temperaturregulierungsspirale angeordnet ist;
einer Luftkanalumschaltklappe (22; 26) zum Umschalten zwischen dem Zuluftkanal und dem Rückluftkanal, wobei der Zuluftkanal ein Luftkanal zum Aufnehmen von Außenluft ist;
einem Außenlufttemperatursensor (5) zum Ermitteln der Temperatur der Außenluft;
einem Rücklufttemperatursensor (6) zum Ermitteln der Temperatur der Luft in dem Raum, die nach außen außerhalb des Raumes abgeführt werden soll; und
einer Steuerung (31), die den Betrieb des Wärmeaustauschventilators, der Temperaturregulierungsspirale, und der Luftkanalumschaltklappe steuert;
**dadurch gekennzeichnet, dass** die Steuerung (31) einen ersten Umschaltbefehl ausführt, um die Luftkanalumschaltklappe (22) in eine Stellung zu versetzen, um vom Zuluftkanal zum Rückluftkanal umzuschalten, wenn die Temperatur der Außenluft, ermittelt von dem Außenlufttemperatursensor, und die Temperatur der Luft in dem Raum, ermittelt von dem Rücklufttemperatursensor, eine vorgegebene Temperaturbedingung während eines Heizbetriebsmodus der Temperaturregulierungsspirale zum Erwärmen der Luft oder eines Kühlbetriebsmodus der Temperaturregulierungsspirale zum Abkühlen der Luft erfüllt;
wobei die Steuerung (31) den ersten Umschaltbefehl entweder ausführt, wenn: die Temperaturregulierungsspirale im Heizbetriebsmodus zum Erwärmen der Luft ist; die Temperatur der Außenluft, ermittelt von dem Außenlufttemperatursensor, niedriger oder gleich zu einem vorgegebenen ersten Temperaturgrenzwert ist; und die Temperatur der Luft in dem Raum, ermittelt von dem Rücklufttemperatursensor, niedriger oder gleich zu einem vorgegebenen zweiten Temperaturgrenzwert ist, oder
die Steuerung (31) den ersten Umschaltbefehl ausführt, wenn: die Temperaturregulierungsspirale in dem Kühlbetriebsmodus ist; die Temperatur der Außenluft, ermittelt von dem Außenlufttemperatursensor, höher oder gleich zu einem vorgegebenen dritten Temperaturgrenzwert ist; und die Temperatur der Luft in dem Raum, ermittelt von dem Rücklufttemperatursensor, höher oder gleich zu einem vorgegebenen vierten Temperaturgrenzwert ist; und
wobei die Steuerung (31) einen zweiten Umschaltbefehl ausführt, um die Luftkanalumschaltklappe in eine Stellung zurückzuschalten, um von dem Rückluftkanal zu dem Zuluftkanal umzuschalten, wenn ein Temperaturunterschied zwischen der eingestellten Temperatur der Temperaturregulierungsspirale und der Temperatur der Luft in dem Raum, ermittelt von dem Rücklufttemperatursensor, einen Zustand kleiner oder gleich zu einem Temperaturgrenzwert annimmt, nachdem der erste Umschaltbefehl ausgeführt ist.

2. Wärmeaustausch-Ventilationssystem nach Anspruch 1, wobei,
wenn die Temperaturregulierungsspirale entweder in einem Heizbetriebsmodus oder in einem Kühlbetriebsmodus ist, die Steuerung (31), basierend auf einer momentanen Zeit und einer vorgegebenen Zeit, den ersten Umschaltbefehl ausführt, um die Luftkanalumschaltklappe in eine Stellung zu versetzen, um von dem Zuluftkanal zu dem Rückluftkanal umzuschalten, und einen zweiten Umschaltbefehl, um die Luftkanalumschaltklappe in eine Stellung zurück zu versetzen, um vom Rückluftkanal zum Zuluftkanal umzuschalten.

3. Wärmeaustausch-Ventilationssystem nach Anspruch 2, wobei
die Steuerung (31) den ersten Umschaltbefehl ausführt, wenn das Wärmeaustausch-Ventilationssystem in Betrieb ist, und den zweiten Umschaltbefehl ausführt, wenn die momentane Zeit nach der vorgegebenen Zeit ist.

4. Wärmeaustausch-Ventilationssystem nach einem der Ansprüche 1 bis 3, wobei
die Steuerung (31) die Luftmenge des Zuluftgebläses nach dem Ausführen des ersten Umschaltbefehls erhöht.

5. Wärmeaustausch-Ventilationssystem nach einem der Ansprüche 1 bis 3, wobei
während des Ablaufs einer Zeit, nach Ausführung des ersten Umschaltbefehls bis zur Ausführung des zweiten Umschaltbefehls, die Steuerung (31) imstande ist, einen Befehl des Abluftgebläses zu einem beliebigen Befehl zu wechseln und den beliebigen Befehl auszuführen, wobei der beliebige Befehl einer der folgenden ist: Befehl zum Stoppen des Abluftgebläses; Befehl, um das Abluftgebläse dazu zu veranlassen, eine kleinere Luftmenge bereitzustellen als die vor der Ausführung des ersten Umschaltbefehls; und Befehl, um das Abluftgebläse dazu zu veranlassen, die gleiche Luftmenge bereitzustellen als die vor der Ausführung des ersten Umschaltbefehls.

6. Wärmeaustausch-Ventilationssystem nach einem der Ansprüche 1 bis 3, wobei
während des Ablaufs einer Zeit, nach Ausführung des ersten Umschaltbefehls, bis zur Ausführung des zweiten Umschaltbefehls, die Steuerung (31) einen vorgegebenen Befehl des Abluftgebläses aus den folgenden ausführt: Befehl zum Stoppen des Abluftgebläses; Befehl, um das Abluftgebläse dazu zu veranlassen, eine kleinere Luftmenge bereitzustellen als vor der Ausführung des ersten Umschaltbefehls; und Befehl, um das Abluftgebläse dazu zu veranlassen, die gleiche Luftmenge beizubehalten als die vor der Ausführung des ersten Umschaltbefehls.

7. Wärmeaustausch-Ventilationssystem nach einem der Ansprüche 1 bis 6, wobei
die Temperaturregulierungsspirale (21) stromabwärts des Wärmeaustauschelements in dem internen Zuluftkanal angeordnet ist.

8. Wärmeaustausch-Ventilationssystem nach einem der Ansprüche 1 bis 6, wobei
die Temperaturregulierungsspirale (25) an einer Stelle eines nachgelagerten Zuluftkanals angeordnet ist, der stromabwärts des internen Zuluftkanals positioniert ist.

9. Wärmeaustausch-Ventilationssystem nach einem der Ansprüche 1 bis 6, des Weiteren mit einem Abzweigungszuluftkanal (13), der von dem Zuluftkanal an einer Stelle eines vorgelagerten Zuluftkanals des Zuluftkanals abzweigt, der stromaufwärts des Wärmeaustauschventilators positioniert ist, und der es dem vorgelagerten Zuluftkanal ermöglicht, mit dem Raum in Verbindung zu treten, wobei
die Luftkanalumschaltklappe eine erste Luftkanalumschaltklappe (22) ist, die an einer Stelle des vorgelagerten Zuluftkanals des Zuluftkanals angeordnet ist, der stromaufwärts des Wärmeaustauschventilators positioniert ist, wobei die erste Luftkanalumschaltklappe zwischen einem ersten Luftkanal und einem zweiten Luftkanal umschaltet, wobei der erste Luftkanal ein Luftkanal zum Aufnehmen der Außenluft ist, sowie die erste Luftkanalumschaltklappe den abzweigenden Zuluftkanal schließt und den vorgelagerten Zuluftkanal öffnet, wobei der zweite Luftkanal ein Luftkanal ist, der es einem Teil des vorgelagerten Zuluftkanals, der stromabwärts des abzweigenden Zuluftkanals angeordnet ist, ermöglicht, mit dem abzweigenden Zuluftkanal in Verbindung zu treten, um die Innenluft zu zirkulieren, sowie die erste Luftkanalumschaltklappe einen stromaufwärts gelegenen Bereich des vorgelagerten Zuluftkanals schließt, und
wobei der zweite Luftkanal der Rückluftkanal ist.

10. Wärmeaustausch-Ventilationssystem nach einem der Ansprüche 1 bis 6 wobei,
die Luftkanalumschaltklappe eine zweite Luftkanalumschaltklappe (26) ist, die stromabwärts des Wärmeaustauschelements in dem Zuluftkanal innerhalb des Wärmeaustauschventilators angeordnet ist, wobei die Luftkanalumschaltklappe zwischen einem dritten Luftkanal und einem vierten Luftkanal umschaltet, wobei der dritte Luftkanal ein Luftkanal zum Aufnehmen der Außenluft ist, wobei die zweite Luftkanalumschaltklappe einen Teil des internen Zuluftkanals, der stromabwärts des Wärmeaustauschelements positioniert ist, von einem Teil des Abluftkanals trennt, der stromaufwärts des Wärmeaustauschelements innerhalb des Wärmeaustauschventilators angeordnet ist, um den Teil des Zuluftkanals, der stromabwärts des Wärmeaustauschelements innerhalb des Wärmeaustauschventilators angeordnet ist, zu öffnen, wobei der vierte Luftkanal ein Luftkanal ist, der es dem Teil des Zuluftkanals, der stromabwärts des Wärmeaustauschelements innerhalb des Wärmeaustauschventilators angeordnet ist, ermöglicht, mit dem Teil des Abluftkanals in Verbindung zu treten, der stromaufwärts des Wärmeaustauschelements innerhalb des Wärmeaustauschventilators positioniert ist, um die Raumluft zu zirkulieren, sowie die zweite Luftkanalumschaltklappe einen Teil des Zuluftkanals schließt, der stromabwärts des Wärmeaustauschelements innerhalb des Wärmeaustauschventilators positioniert ist, und wobei
der vierte Luftkanal der Rückluftkanal ist.

## Revendications

1. Système de ventilation à échange de chaleur (100 ; 200 ; 300) comprenant un ventilateur d'échange de chaleur (1), un conduit d'air d'alimentation (11) pour fournir de l'air extérieur à l'extérieur d'une pièce dans la pièce, et un conduit d'air d'évacuation (12) pour évacuer l'air dans la pièce vers l'extérieur de la pièce, le système comprenant :
le ventilateur d'échange de chaleur comprenant :
un boîtier (1e) ayant un conduit d'air d'alimentation interne et un conduit d'air d'évacuation interne qui sont formés à travers celui-ci, le conduit d'air d'alimentation interne étant le conduit d'air d'alimentation à l'intérieur du ventilateur d'échange de chaleur, le conduit d'air d'évacuation interne étant le conduit d'air d'évacuation à l'intérieur du ventilateur d'échange de chaleur, le conduit d'air d'alimentation interne et le conduit d'air d'évacuation interne étant indépendants l'un de l'autre ;
une soufflante d'alimentation (3) prévue dans le conduit d'air d'alimentation interne ;
une soufflante d'évacuation (4) prévue dans le conduit d'air d'évacuation interne ; et
un élément d'échange de chaleur (2) prévu à l'intérieur du boîtier pour effectuer un échange de chaleur entre l'air passant par le conduit d'air d'alimentation interne et l'air passant par le conduit d'air d'évacuation interne ;
une bobine de réglage de la température (21 ; 25) disposée en aval de l'élément d'échange de chaleur dans le conduit d'air d'alimentation pour chauffer ou refroidir l'air passant par le conduit d'air d'alimentation en aval de l'élément d'échange de chaleur ;
un conduit d'alimentation en air de retour pour renvoyer l'air de la pièce vers une partie du conduit d'air d'alimentation située en amont de la bobine de réglage de la température ;
un registre de commutation de conduit d'air (22 ; 26) pour commuter entre le conduit d'air d'alimentation et le conduit d'alimentation en air de retour, le conduit d'air d'alimentation étant un conduit d'air pour prendre l'air extérieur ;
un capteur de température d'air extérieur (5) pour détecter la température de l'air extérieur ;
un capteur de température d'air de retour (6) pour détecter la température de l'air dans la pièce qui doit être évacué à l'extérieur de la pièce ; et
un dispositif de commande (31) pour commander les opérations du ventilateur d'échange de chaleur, de la bobine de réglage de la température et du registre de commutation de conduit d'air ;
**caractérisé en ce que** le dispositif de commande (31) exécute une première commande de commutation pour placer le registre de commutation de conduit d'air (22) dans une position pour commuter du conduit d'air d'alimentation au conduit d'alimentation en air de retour lorsque la température de l'air extérieur détectée par le capteur de température d'air extérieur et la température de l'air dans la pièce détectée par le capteur de température d'air de retour satisfont une condition de température prédéterminée pendant un mode de fonctionnement de chauffage de la bobine de réglage de la température pour chauffer l'air ou pendant un mode de fonctionnement de refroidissement de la bobine de réglage de la température pour refroidir l'air ;
le dispositif de commande (31) exécutant la première commande de commutation lorsque : la bobine de réglage de la température est dans le mode de fonctionnement de chauffage pour chauffer l'air ; la température de l'air extérieur détectée par le capteur de température d'air extérieur est inférieure ou égale à un premier seuil de température prédéterminé ; et la température de l'air dans la pièce détectée par le capteur de température d'air de retour est inférieure ou égale à un deuxième seuil de température prédéterminé, ou
le dispositif de commande (31) exécutant la première commande de commutation lorsque : la bobine de réglage de la température est dans le mode de fonctionnement de refroidissement ; la température de l'air extérieur détectée par le capteur de température d'air extérieur est supérieure ou égale à un troisième seuil de température prédéterminé ; et la température de l'air dans la pièce détectée par le capteur de température d'air de retour est supérieure ou égale à un quatrième seuil de température prédéterminé ; et
le dispositif de commande (31) exécutant une seconde commande de commutation pour rétablir le registre de commutation de conduit d'air à une position pour commuter du conduit d'alimentation en air de retour au conduit d'air d'alimentation, lorsqu'une différence de température entre une température de consigne de la bobine de réglage de la température et la température de l'air dans la pièce détectée par le capteur de température d'air de retour devient inférieure ou égale à un seuil de différence de température prédéterminé après l'exécution de la première commande de commutation.

2. Système de ventilation à échange de chaleur selon la revendication 1,
lorsque la bobine de réglage de la température est soit dans un mode de fonctionnement de chauffage, soit dans un mode de fonctionnement de refroidissement, le dispositif de commande (31) exécutant, sur la base d'un temps actuel et d'un temps prédéterminé, une première commande de commutation pour placer le registre de commutation de conduit d'air dans une position pour commuter du conduit d'air d'alimentation au conduit d'alimentation en air de retour, et une seconde commande de commutation pour rétablir le registre de commutation de conduit d'air dans une position pour commuter du conduit d'alimentation en air de retour au conduit d'air d'alimentation.

3. Système de ventilation à échange de chaleur selon la revendication 2,
le dispositif de commande (31) exécutant la première commande de commutation lorsque le système de ventilation à échange de chaleur est en fonctionnement, et exécutant la seconde commande de commutation lorsque l'heure actuelle a dépassé l'heure prédéterminée.

4. Système de ventilation à échange de chaleur selon l'une quelconque des revendications 1 à 3,
le dispositif de commande (31) augmentant un volume d'air de la soufflante d'alimentation après avoir exécuté la première commande de commutation.

5. Système de ventilation à échange de chaleur selon l'une quelconque des revendications 1 à 3,
pendant un temps s'écoulant après l'exécution de la première commande de commutation jusqu'à l'exécution de la seconde commande de commutation, le dispositif de commande (31) étant capable de commuter la commande de la soufflante d'évacuation à une commande arbitraire et d'exécuter la commande arbitraire, la commande arbitraire étant l'une quelconque parmi : une commande pour arrêter la soufflante d'évacuation ; une commande pour amener la soufflante d'évacuation à fournir un volume d'air plus petit que celui avant l'exécution de la première commande de commutation ; et une commande pour amener la soufflante d'évacuation à maintenir le même volume d'air que celui avant l'exécution de la première commande de commutation.

6. Système de ventilation à échange de chaleur selon l'une quelconque des revendications 1 à 3,
pendant un temps s'écoulant après l'exécution de la première commande de commutation jusqu'à l'exécution de la seconde commande de commutation, le dispositif de commande (31) exécutant l'une quelconque des commandes prédéterminées de la soufflante d'évacuation parmi : une commande pour arrêter la soufflante d'évacuation ; une commande pour amener la soufflante d'évacuation à fournir un volume d'air plus petit que celui avant l'exécution de la première commande de commutation ; et une commande pour amener la soufflante d'évacuation à maintenir le même volume d'air que celui avant l'exécution de la première commande de commutation.

7. Système de ventilation à échange de chaleur selon l'une quelconque des revendications 1 à 6,
la bobine de réglage de la température (21) étant disposée en aval de l'élément d'échange de chaleur dans le conduit d'air d'alimentation interne.

8. Système de ventilation à échange de chaleur selon l'une quelconque des revendications 1 à 6,
la bobine de réglage de la température (25) étant disposée au niveau d'une partie d'un conduit d'air d'alimentation aval situé en aval du conduit d'air d'alimentation interne.

9. Système de ventilation à échange de chaleur selon l'une quelconque des revendications 1 à 6, comprenant en outre un conduit d'air d'alimentation de dérivation (13) dérivant du conduit d'air d'alimentation au niveau d'une partie d'un conduit d'air d'alimentation amont du conduit d'air d'alimentation situé en amont du ventilateur d'échange de chaleur, et permettant au conduit d'air d'alimentation amont de communiquer avec la pièce,
le registre de commutation de conduit d'air étant un premier registre de commutation de conduit d'air (22) disposé au niveau d'une partie du conduit d'air d'alimentation amont du conduit d'air d'alimentation situé en amont du ventilateur d'échange de chaleur, le premier registre de commutation de conduit d'air commutant entre un premier conduit d'air et un deuxième conduit d'air, le premier conduit d'air étant un conduit d'air pour prendre l'air extérieur lorsque le premier registre de commutation de conduit d'air ferme le conduit d'air d'alimentation de dérivation et ouvre le conduit d'air d'alimentation amont, le deuxième conduit d'air étant un conduit d'air permettant à une partie du conduit d'air d'alimentation amont situé en aval du conduit d'air d'alimentation de dérivation de communiquer avec le conduit d'air d'alimentation de dérivation afin de faire circuler l'air intérieur lorsque le premier registre de commutation de conduit d'air ferme un côté amont du conduit d'air d'alimentation amont, et
le deuxième conduit d'air étant le conduit d'alimentation en air de retour.

10. Système de ventilation à échange de chaleur selon l'une quelconque des revendications 1 à 6,
le registre de commutation de conduit d'air étant un second registre de commutation de conduit d'air (26) disposé en aval de l'élément d'échange de chaleur dans le conduit d'air d'alimentation à l'intérieur du ventilateur d'échange de chaleur, le second registre de commutation de conduit d'air commutant entre un troisième conduit d'air et un quatrième conduit d'air, le troisième conduit d'air étant un conduit d'air pour aspirer l'air extérieur lorsque le second registre de commutation de conduit d'air sépare une partie du conduit d'air d'alimentation interne située en aval de l'élément d'échange de chaleur d'une partie du conduit d'air d'évacuation située en amont de l'élément d'échange de chaleur à l'intérieur du ventilateur d'échange de chaleur de manière à ouvrir la partie du conduit d'air d'alimentation située en aval de l'élément d'échange de chaleur à l'intérieur du ventilateur d'échange de chaleur, le quatrième conduit d'air étant un conduit d'air pour permettre à la partie du conduit d'air d'alimentation située en aval de l'élément d'échange de chaleur à l'intérieur du ventilateur d'échange de chaleur de communiquer avec la partie du conduit d'air d'évacuation située en amont de l'élément d'échange de chaleur à l'intérieur du ventilateur d'échange de chaleur de façon à faire circuler l'air intérieur lorsque le second registre de commutation de conduit d'air ferme une partie du conduit d'air d'alimentation située en aval de l'élément d'échange de chaleur à l'intérieur du ventilateur d'échange de chaleur, et
le quatrième conduit d'air étant le conduit d'alimentation en air de retour.
